# EUROPÄISCHE PATENTSCHRIFT

(11) **EP 0 508 177 B1**
(45) Veröffentlichungstag und Bekanntmachung des Hinweises auf die Patenterteilung: **05.07.1995**
(21) Anmeldenummer: 92104817.9
(22) Anmeldetag: 19.03.1992
(51) Int. Cl.: H02H 3/093, H02H 1/06

(54) **Digitales Schutzrelais**
Digital protection relay
Relais de protection digital

(30) Priorität: 09.04.1991 DE 4111439
(43) Veröffentlichungstag der Anmeldung: 14.10.1992
(73) Patentinhaber: Kommanditgesellschaft Ritz Messwandler GmbH & Co., D-20243 Hamburg (DE)
(72) Erfinder: Ruf, Dieter, Dipl.-Ing., W-2000 Hamburg 65 (DE); Proth, Andreas, Dipl.-Ing., W-3121 Lüder (DE); Stöber, Bernd, Dipl.-Ing., W-2359 Henstedt-Ulzburg (DE)
(74) Vertreter: Vonnemann, Gerhard, Dr.-Ing.

(56) Entgegenhaltungen:
- DE-A- 3 223 687
- DE-A- 3 304 921
- US-A- 4 884 164

## Beschreibung

Die Erfindung betrifft eine Schutzeinheit gemäß dem Oberbegriff des Anspruchs 1. Eine solche Schutzeinheit ist aus der DE-A-3 304 921 bekannt.

Derartige Schutzeinheiten sind beispielsweise als Trafo-Schutzeinheit bekannt. Dabei messen drei Spezialwandler, die über vollisolierte Mittelspannungskabel gesteckt werden, die Kabelströme und speisen ein Relais. Das Relais regt bei vorbestimmten Stromwerten nach bestimmter Zeit einen Auslösemagneten an, der einen Schalter, z.B. Leistungsschalter, Lasttrennschalter, betätigt.

Die vorerwähnten Auslösewandler sind für die Transformator-Nennströme, wie sie z.B. in 10- und 20-kV-Netzen vorkommen, ausgelegt und berücksichtigen Transformator-Scheinleistungen von z.B. 100kVA bis 4000kVA. Mittels Sekundäranzapfungen an den Stromwandlern lassen sich maximal sechs Nennströme einstellen.

Das Relais besitzt einen zusätzlichen Eingang, über den von anderen Meldern ebenfalls der Auslösemagnet betätigt werden kann. Die anzulegende Spannung beträgt 220 V.

Nachteilig an den bekannten Schutzeinrichtungen ist, daß nur ein Teil der Anwendungsfälle mit standardisierten Relais abgedeckt werden kann und im übrigen die einzelnen Teile speziell auf den jeweiligen Einzelfall ausgelegt werden müssen. Dies erhöht nachteilig den Aufwand zur Herstellung und Lagerhaltung der verschiedenen Relaistypen. Obwohl die bekannten Schutzeinrichtungen bereits einen sehr großen Strom-Bereich erfassen, ist eine weitere Vergrößerung wünschenswert.

Ein besonderes Problem ergibt sich daraus, daß der Wandler nicht nur den Meßwert, sondern auch Betriebsenergie für das Auswertegerät und Auslöseenergie für einen nachgeschalteten elektromechanischen Auslöser bereitstellen muß. Diese Gesamtforderung führt bei dem sehr großen Bereich, in dem das Gerät seine Überwachungsfunktion wahrnehmen muß, zu Problemen: Bei kleinen Meßströmen reicht die Leistungsfähigkeit des Wandlers nicht aus, um gleichzeitig für alle angesprochenen Funktionen Energie bereitzustellen, so daß nacheinander gearbeitet werden muß. Bei hohen Strömen hingegen ist die Leistungsfähigkeit des Wandlers überdimensioniert. Es steht mehr Energie zur Verfügung als notwendig.

Aufgabe der Erfindung ist es, eine Schutzeinheit anzugeben, die sich leicht an unterschiedliche Anwendungsfälle anpassen läßt und insbesondere trotzdem selbstversorgt.

Die Aufgabe wird dadurch gelöst, daß das elektronische Relais eine Meßwert-Aufbereitungseinheit aufweist mit einem Analog-Digital-Wandler, zur digitalen Darstellung der vom Wandler erfaßten Meßgröße, einen digitalen Speicher zum Ablegen einer digitalen Verkörperung mindestens einer Auslösekennlinie, eine Recheneinheit, zum digitalen Vergleich der Meßgröße mit der Auslösekennlinie sowie einem Programmspeicher, zum Ablegen eines Vergleichs- und Auslösealgorithmus aufweist.

Somit kann je nach Anwendungsfall eine unterschiedliche Auslösekennlinie gespeichert werden. Eingriffe in die Hardware werden also vorteilhaft vermieden.

Die erfindungsgemäße Baugruppe gewinnt gleichzeitig mit dem Meßsignal als sogenannter Selbstversorger auch die Energieversorgung sowohl für den Betrieb des Gerätes als auch für einen externen Auslösemechanismus.

In Ausgestaltung der Erfindung ist vorgesehen, daß die Schutzeinheit selbstversorgend ausgebildet ist.

Diese Maßnahme erhöht die Sicherheit.

In Verbindung mit der Maßnahme, daß sie eine Steuereinheit zur Verteilung von Wandlerenergie aufweist und/oder daß die Steuereinheit einen Ableiter für überschüssige Energie aufweist und/oder daß die Steuereinheit einen Energiespeicher für die Eigenversorgung aufweist, wird erreicht, daß das Relais einen besonders großen Strombereich abdeckt, ohne selbst Schaden zu nehmen oder in seiner Funktion beeinträchtigt zu sein.

Dabei wird das Wandler-Sekundärsignal gleichgerichtet und über einen Meßwiderstand und eine Steuerschaltung drei Baugruppen zugeführt, die Energie speichern bzw. verbrauchen können. Da meist ein dreiphasiges Netz überwacht wird, sind drei Wandlerkreise vorhanden, die so verschaltet sind, daß jeder Kreis-Strom durch einen separaten Meßwiderstand fließt, bezüglich des Energiekreises aber parallel geschaltet ist.

Der Spannungsabfall am Meßwiderstand ist dem Primärstrom des Wandlers, das ist der zu überwachende Strom, proportional. Über einen Differenzverstärker wird eine Baugruppe bedient, in der eine Oder-Verknüpfung der drei Einzel-Meßsignale erfolgt, so daß immer das größte zur Reaktion führt.

Die Steuerschaltung sorgt dafür, daß die parallelgeschalteten Phasenströme abhängig von den gesetzten Prioritäten und Energie-Erfordernissen auf die drei Baugruppen Energiespeicher für Versorgung bzw. für Leistungsschalter sowie Energie-Ableiter verteilt werden.

Die Priorität für die Steuerung der Energieverteilung ist vorteilhaft wie folgt festgelegt:
1. Bereitstellung der Betriebsenergie
2. Laden des Auslöseenergiespeichers
3. Öffnen des Energie-Ableiters.

In weiterer Ausgestaltung der Erfindung ist vorgesehen, daß das elektronische Relais in Baueinheit mit einem Wandler ausgebildet ist, vorzugsweise in einer Kapsel zur Vollisolierung.

Damit ist ein gleichwertiger Schutz geschaffen, der sich mühelos in eine Schaltanlage integrieren läßt, ohne die verfolgten Ziele, z.B. das der Vollisolierung, aufgeben zu müssen. Es ist also ein System, daß sich für den nachträglichen Einbau in eine Schaltanlage neuerer Technik eignet.

Den Ausgangspunkt dieses neuen Systems bildet in vielen Fällen ein leistungsarmer Auslösemagnet im Schaltschloß des Schalters. Dieser Magnet wird von der Schutzeinheit, bestehend aus Stromwandler und Schutzrelais direkt angesteuert.

Für leistungsstärkere Auslösemagneten ist vorgesehen, daß das elektronische Relais potentialfreie Wechselkontakte aufweist.

Dieses System, das nach dem Prinzip der Wandlerstromauslösung arbeitet, ermöglicht eine Schutzfunktion über einen weiten Bereich, angefangen bei kleinen Strömen im Überlastbetrieb bis hin zum Kurzschlußbereich. Die Anpassung an unterschiedliche Nennbedingungen und die Realisierung verschiedener Auslösecharakteristika ist durch entsprechende Kombination von Wandlern und Relais problemlos möglich.

Ausgehend von den Anforderungen, die sich aus dem Betrieb der Anlage ergeben, lassen sich zwei Anwendungsgebiete im Bereich der Mittelspannungsebene definieren:
* Leitungs- und Netzschutz
* Transformatorschutz.

Der Leitungs- und Netzschutz wird in Übergabestationen angewendet. Er arbeitet als Bindeglied zwischen dem übergeordneten Schutz beim Energieversorgungsunternehmen und der Mittelspannungsverteilung mit Transformatorabgängen. Die Schutzfunktion besteht darin, daß ein System aus Meßwertaufnehmer und Relais die Phasenströme überwacht und gegebenenfalls den Leistungsschalter ansteuert. Als Abschaltbedingung gilt: Wird ein bestimmter Schwellwert des Primärstromes für die gesamte Dauer der am Relais eingestellten Verzögerungszeit überschritten, erfolgt eine Auslösung. Ein zweiter Schwellwert mit anderer Auslösezeit ergänzt die Funktion.

Der Schutz von Mittelspannungstransformatoren gliedert sich in zwei technische Lösungen:
a) Transformatorschutz über einen eigenen Leistungsschalter. Das Prinzip ähnelt dem Leitungs- und Netzschutz. Die Strommessung und Abschaltung geschieht primärseitig. Die Abschaltung erfolgt nach einer Strom/Zeit-Kennlinie.
b) Schutz mit einer Kombination aus Erdungsschalter, Lasttrenner und einem übergeordneten Leistungsschalter.

Der Primärstrom wird gemessen und über eine entsprechende Kennlinie ausgewertet. Soll abgeschaltet werden, wird zwischen zwei Fällen unterschieden:
Ist der Primärstrom unterhalb der Leistungsgrenze des Lasttrenners, wird nur dieser angesteuert.
Ist der Strom jedoch größer, erfolgt eine bestimmte Reihenfolge an Schalthandlungen. Zuerst wird ein Erdungsschalter betätigt, so daß ein Erdschlußstrom über Lasttrenner und übergeordneten Leistungsschalter fließt. Anschließend schaltet sich der übergeordnete Leistungsschalter ab, so daß der Lasttrenner stromfrei wird und dann geöffnet werden kann.

Zur Verwirklichung dieser unterschielichen Schutzfunktionen ist vorgesehen, daß das elektronische Relais einen Zusatzeingang beispielsweise für ein Buchholzrelais oder für eine Austeuerung über eine Mitnehmerschaltung eines Niederspannungs-Leistungsschalters aufweist und/oder das elektronische Relais mindestens einen Stromwandler-Zusatzeingang zur Feststellung von Stromfluß in Ringkabelfeldern bei Verwendung eines Abschaltsystems aus Erdungs-Lasttrenn- und Leistungsschalter aufweist.

Für Prüfzwecke ist es vorteilhaft, wenn das elektronische Relais selbstkalibrierend ausgebildet ist.

Wenn das elektronische Relais eine Watchdog-Schaltung aufweist, wird bei einem Programmabsturz vorteilhaft ein Reset erzwungen.

Die Wartung bzw. Überprüfung der Schutzeinrichtung wird wesentlich dadurch erleichtert, daß das elektronische Relais eine Selbstdiagnoseschaltung aufweist und/oder daß das elektronische Relais eine Wirkverbindung zu einem Display aufweist.

Die Betriebssicherheit wird dadurch erhöht, daß im elektronischen Relais eine Auslösewiederholung vorgesehen ist, vorzugsweise ohne Berücksichtigung der Kennlinie.

Da das gesamte System als Selbstversorger ausgelegt ist, ist die Auslösung zunächst ein einmaliger Vorgang. Die Reaktion auf die Auslösung ist die Freischaltung und der Entzug der primärseitig bereitgestellten Energie für die Spannungsversorgung. Dadurch schaltet sich das Schutzrelais selbstätig ab. Ist die Auslösung aber aus irgendeinem Grund nicht erfolgreich, arbeitet das Schutzrelais weiter. Für diesen Fall ist die Auslösewiederholung vorgesehen. Nach einem Auslösevorgang wird geprüft, ob die Eingänge stromlos werden. Ist dies nicht der Fall, wird nach der Feststellung eines genügenden Ladezustands des Energiespeichers der Auslösevorgang ohne Berücksichtigung der Kennlinie so schnell wie möglich wiederholt.

Eine Auslösungsanforderung kann vorteilhaft simuliert und ggf. angezeigt oder ausgeführt werden, wenn das elektronische Relais eine Eingabevorrichtung zur Eingabe eines simulierten Primärstromes aufweist.

Die Erfindung wird in Zeichnungen beschrieben, wobei weitere vorteilhafte Einzelheiten den Zeichnungen zu entnehmen sind.

Die Zeichnungen zeigen im einzelnen:
- Fig. 1: Prinzipschaltung des Schutzrelais mit der Baugruppe Netzteil/Meßwertaufbereitung,
- Fig. 2: Transformatorschutz mit Leistungsschalter,
- Fig. 3: Transformatorschutz mit Lasttrenner und Erdungsschalter,
- Fig. 4: Schnittstellen des Schutzrelais,
- Fig. 5: Auslösegebiet der Kennlinie t=f(I/I_{N}),
- Fig. 6: Auslösegebiet der Kennlinie t=f(I) für Auslösung mit Lasttrenner und Erdungsschalter,
- Fig. 7: Auslösegebiet der Kennlinie t=f(I/I_{N}) für Leitungs- und Netzschutz,
- Fig. 8: Beispielkennlinien für Transformatorschutz.

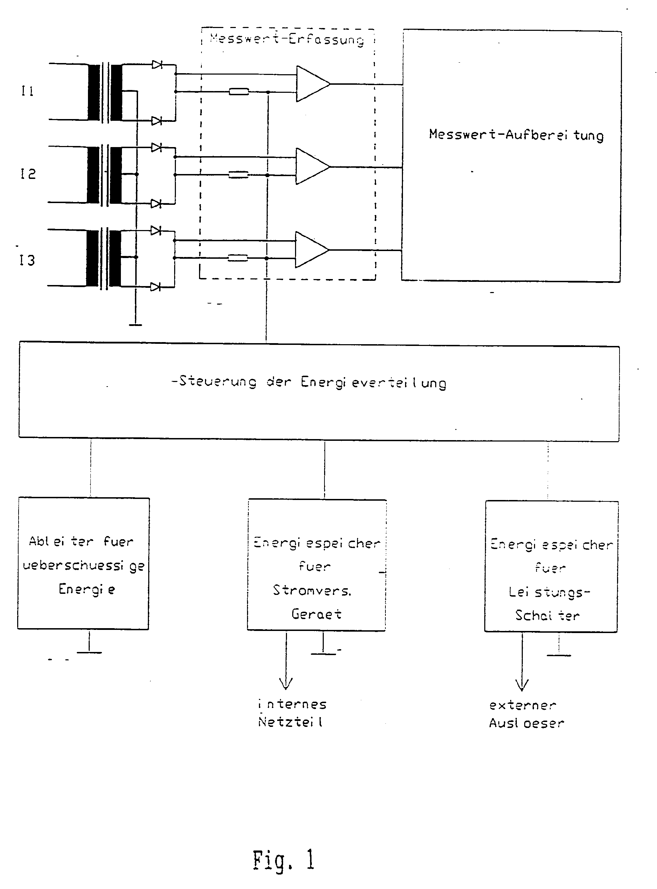

Der Mehrphasen-Überstromschutz hat die Aufgabe, den elektrischen Strom in einem Dreiphasen-Mittelspannungsnetz auf Überstrom hin zu überwachen um gegebenenfalls eine Auslösung zu veranlassen. Es ergibt sich ein dreigeteiltes Konzept aus Strommeßwertaufnehmer, Schutzrelais und Schalter. Fig. 1 zeigt den Meßwertaufnehmer und das Schutzrelais. Schalter und der zugehörige Auslösemagnet sind Bestandteil der nicht dargestellten eigentlichen Schaltanlage.

Als Meßwertaufnehmer werden Stromwandler verwendet. Sie haben die Hauptaufgabe, ein Abbild des Phasenstromes in verwertbarer Größe zu liefern.

Außerdem weisen sie Testeinrichtungen auf und liefern die Hilfsenergie für die Selbstversorgung bei galvanischer Trennung.

Das Schutzrelais bekommt die Signale von den Stromwandlern und wertet diese aus. Es trifft die Entscheidung, ob und in welcher Form (Kennlinie) eine Reaktion zu erfolgen hat und leitet diese über entsprechende Ausgänge ein.

Die Eingänge sind von folgender Art:
- Je ein Stromeingang pro Phase des Netzes von den Meßwandlern
- Zusatzeingang z.B. für ein Buchholzrelais oder für eine Ansteuerung über eine Mitnehmerschaltung eines Niederspannungs-Leistungsschalters
- Bei Bedarf Stromwandler-Zusatzeingänge zur Feststellung von Stromfluß in den Ringkabelfeldern bei Verwendung des Abschaltsystems aus Erdungs-, Lasttrenn- und Leistungsschalter.

Nach der Signalauswertung werden verschiedene Ausgänge oder in Kombination angesteuert:
- Auslösemagnet: Ein Energiespeicher wird über ein Schaltglied entladen. Der Leistungsimpuls steht an den Ausgangsklemmen zur Verfügung.
- Bei Bedarf kann ein Schauzeichen eingebaut oder extern abgeschlossen werden.
- Relais zum Schalten der Lasttrenn- und Erdungsschalter
- Ein optionales Display zum Anzeigen von Informationen.

Die Signalauswertung bezieht ihre Betriebsspannung aus der Spannungsversorgungseinheit. Sie läßt sich in zwei Funktionsblöcke aufteilen:
- Elektronikversorgung
- Auslöseenergiespeicher

Der Energiebedarf der Einheit wird über die Stromwandler bezogen. Die Wandler der drei Phasen speisen gleichberechtigt die Spannungsversorgungseinheit, wobei eine Phase allein bereits die benötigte Energie bereitstellt. Dabei gewährleistet eine interne Steuerung, daß zunächst die Elektronikversorgung gesichert ist, und dann erst der Auslöseenergiespeicher geladen wird.

Die Meßwertaufbereitung besteht im Kern aus einem Mikrocontroller mit einem EPROM als Programmspeicher. Dazu kommen verschiedene Bausteine mit unterschiedlichen Aufgaben. In diesem Funktionsblock werden die Daten von einem A/D-Wandler und den anderen Eingängen zusammengefaßt und bewertet. Daraus wird gemäß einer Kennlinie die Auslösezeit ermittelt. Zum Auslösezeitpunkt erfolgt eine Kontrolle des Ladezustandes des Energiespeichers und dann die vom Mikrocontroller entsprechend der Ausgangskonfiguration und eines vorgesehenen Funktionsablaufs gesteuerte Schalthandlung. Reicht der Ladezustand nicht aus, erfolgt die Auslösung erst dann, wenn der Energiespeicher genügend geladen ist.

Zur Übermittlung von bestimmten Informationen an den Mikrocontroller werden Kurzschlußbrücken gesetzt oder DIP-Schalter umgestellt. Damit ist es möglich, dem Digitalteil die Eingangs- bzw. Ausgangskonfiguration mitzuteilen, aber es kann auch ein Sondermodus eingestellt werden. Solche Modi sind für Prüfzwecke vorteilhaft nutzbar. Wichtig ist der reine Meßmodus ohne Auslösung, um die Meßwertvorverarbeitung zu prüfen. Möglich ist auch eine automatische Kalibrierung (z.B. der Kennlinie, der Symmetrie der Kanäle usw.) bei Verwendung eines EEPROM.

Soll zusätzlich ein Display als Anzeigeeinheit angeschlossen werden, wird eine externe Hilfsspannung hierfür vorgesehen.

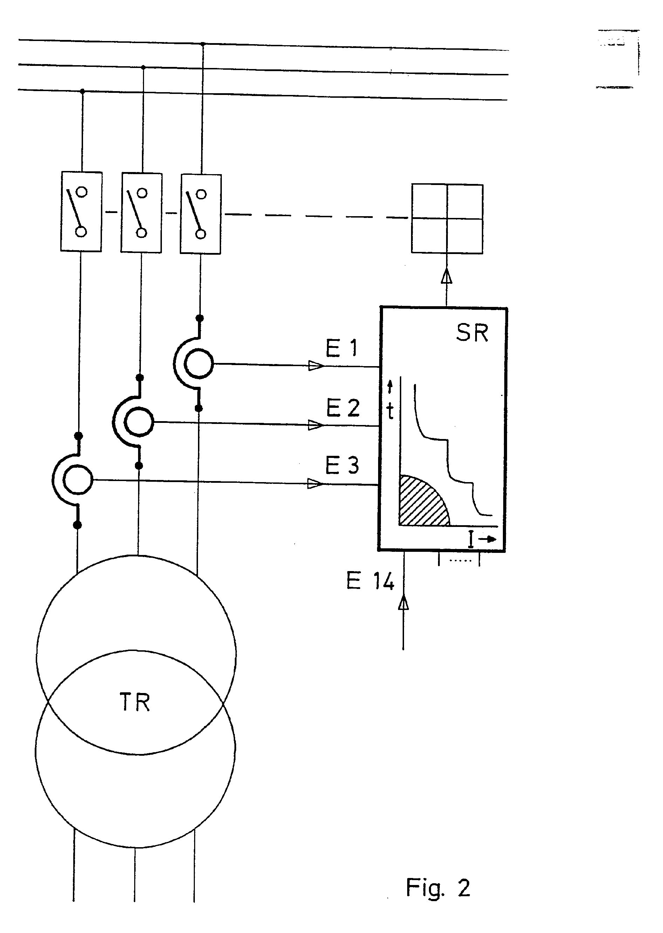

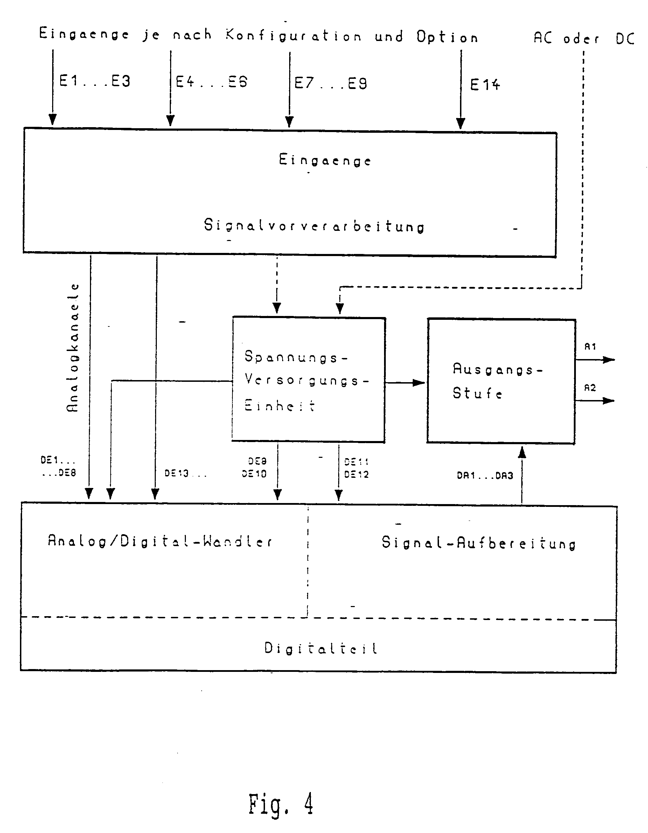

Transformatorschutz und Leistungsschalter: In den Fig. 2 und 4 sind die Eingänge dargestellt.

Die Meßsignale der drei Schutzrelaiseingänge E1, E2, E3 und der Zusatzeingang E14 werden ständig abgefragt und ausgewertet. Die Eingänge E1 bis E3 bekommen ein analoges AC-Signal zugeführt. Den gemessenen Strömen sind definierte Auslösezeiten zugeordnet. Den Zusammenhang bilden die Kennlinien. Der Zusatzeingang E14 erhält ein AC-Signal, das nur zwei Bedeutungen haben kann:
- keine Auslösung
- Unverzögerte Auslösung.

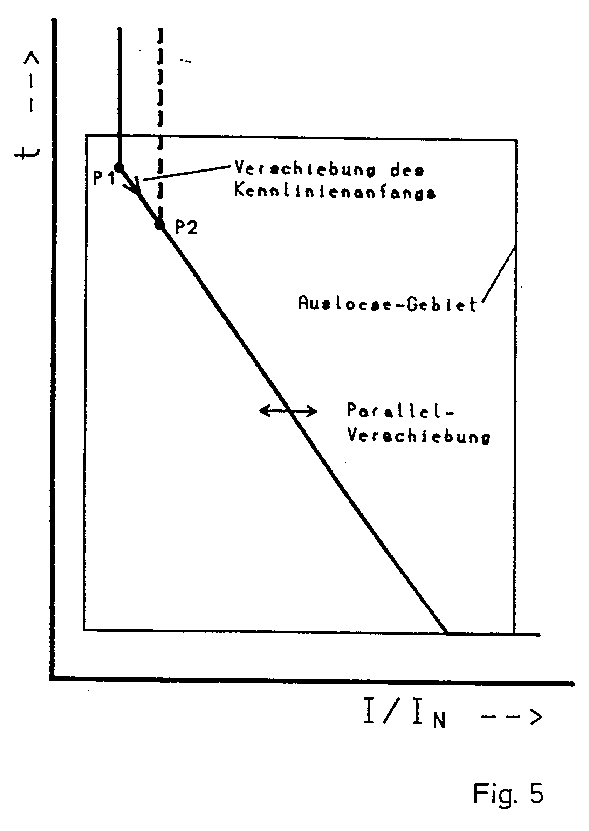

Das Funktionsprinzip wird anhand der Kennlinien in Fig. 5 erläutert:

### a) Auslösegebiet

Die Kennlinie liegt in einem Strom/Zeit-Bereich, für den es Grenzwerte gibt, die sich aus technischen Erfordernissen ergeben. Dieser Bereich wird im Diagramm als Auslösegebiet bezeichnet. Technisch sinnvolle Kennlinienverläufe sind in diesem Gebiet programmierbar. Das Auslösegebiet wird durch verschiedene Anforderungen eingegrenzt:
- Keine Auslösung unter 1,5 I_{N Trafo*}
- Die geringste Auslösezeit liegt bei 20ms.
- Programmierbar sind Kennlinienverläufe bis 40I_{N}. Darüber liegende Ströme haben immer die kleinste vorgegebene Auslösezeit.
- Die größte programmierbare Auslösezeit beträgt 200s, darüber gibt es keine Auslösung.

### b) Nennbetrieb

Bis zu 1,5I_{N Trafo} keine Auslösung

### c) Überstrom- und Kurzschlußbetrieb

Unterer Auslösewert: 1,5 I_{N Trafo}; Auslösezeit 200s (Kennlinienanfang) mit der Möglichkeit der Verschiebung zwischen 1,5 und 2,5 I_{N Trafo}.
Obere Auslösegrenze: Messung bis 40 I_{N Trafo};
Auslösezeit: bis zu 20ms herunter.
Parallelverschiebung der Kennlinie bis ±25% (in Stufen am Gerät) innerhalb des Auslösegebietes.

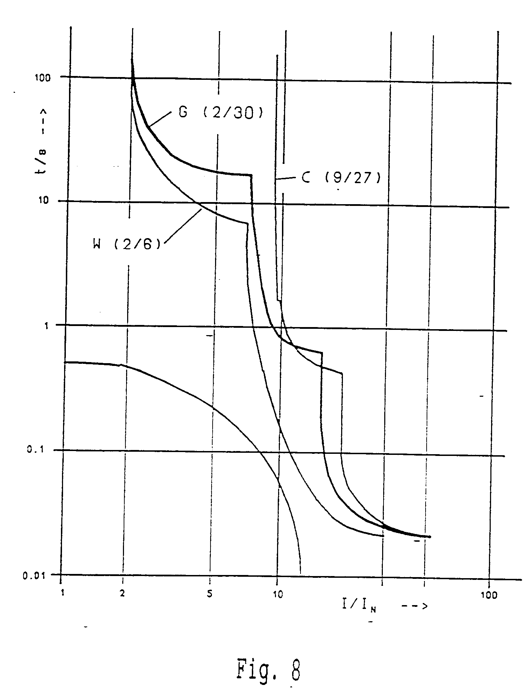

Beispiele für bisher gebräuchliche Kennlinien stellen die Kurven G2/30, W2/6 und C9/27 in Fig. 8 dar.

Werden Ströme größer 40 I_{N Trafo} gemessen, verläuft die Kennlinie parallel zu X-Achse (Nennströme). Für Ströme unterhalb des unteren Ansprechwertes verläuft die Kennlinie in Richtung "keine Auslösung".

Die Möglichkeit nach der Verschiebung des Kennlinienanfangspunktes und einer Parallelverschiebung erlaubt eine weitere Feinanpassung vor Ort. Eine Kennlinie, die ihren Anfang bei 1,5 I_{N Trafo} nimmt, kann durch die geforderte Anfangsverschiebung dann später beginnen, bleibt aber in ihrem weiteren Verlauf unverändert.

Die Parallelverschiebung zur Zeit-Achse ist eine Anpassungsmöglichkeit zwischen dem Transformatoreinschaltgebiet und einem übergeordneten Schutz. Diese Veränderungen werden hardwaremäßig, z.B. über Brücken an den Gehäuseklemmen, durgeführt.

### Ausgang:

Auslösung bedeutet die Ansteuerung eines oder zweier Stellglieder (A1, A2) in Form eines geeigneten Signals (z.B. TTL-Pegel). Als Stellglieder sind für den Leistungsimpulsausgang (A1) Thyristoren oder Transistoren anwendbar. Der Verbraucher ist dann ein Auslösemagnet. Die weitere Ansteuerung eines Kleinschaltrelais mit belastbaren potentialfreien Wechselkontakten oder alternativ dazu ein Schauzeichen ist ebenfalls möglich. Es ist möglich, sowohl die Ausgänge A1 und A2 gleichzeitig anzusprechen, als auch für Testzwecke den Ausgang A2 allein.
A1: Auslösemagnet
A2: Schauzeichen oder Kleinschaltrelais.

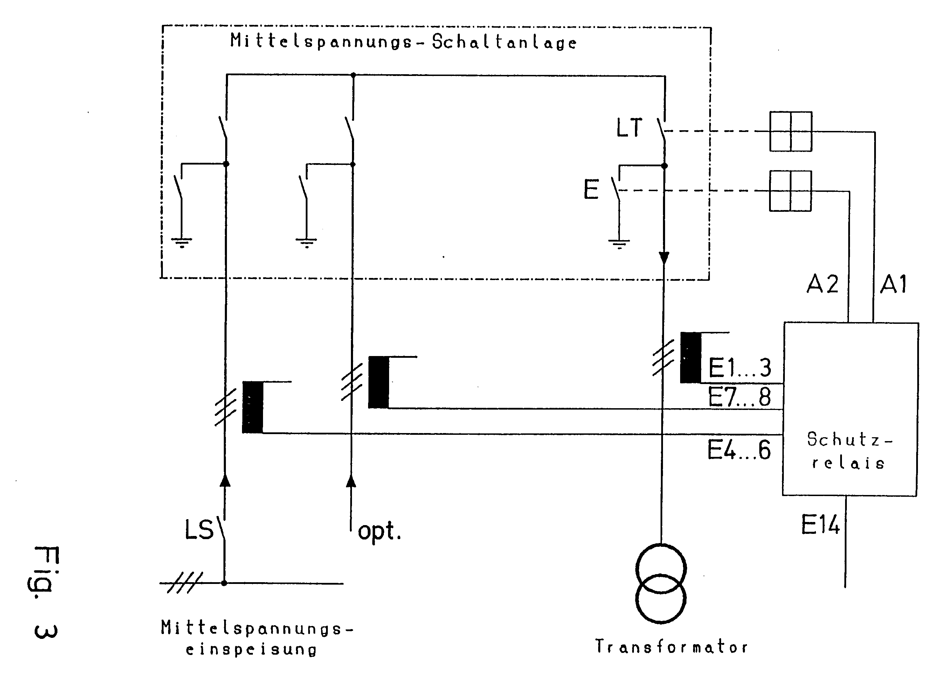

Transformatorschutz und Lasttrenner und Erdungsschalter: Fig. 3 und 4 zeigen Eingänge bei einem Transformatorschutz mit Lasttrenner und Erdungsschalter.

Die Eingänge E1, E2, E3 und E14 werden wie bereits beschrieben behandelt. Hinzu kommt allerdings die Abfrage der Eingänge E4 bis E9 (optional E10 bis E12), die die Zustände in den Ringkabelfeldern erfassen. Bei diesen Eingängen wird nur der Zustand Strom=0 erkannt.

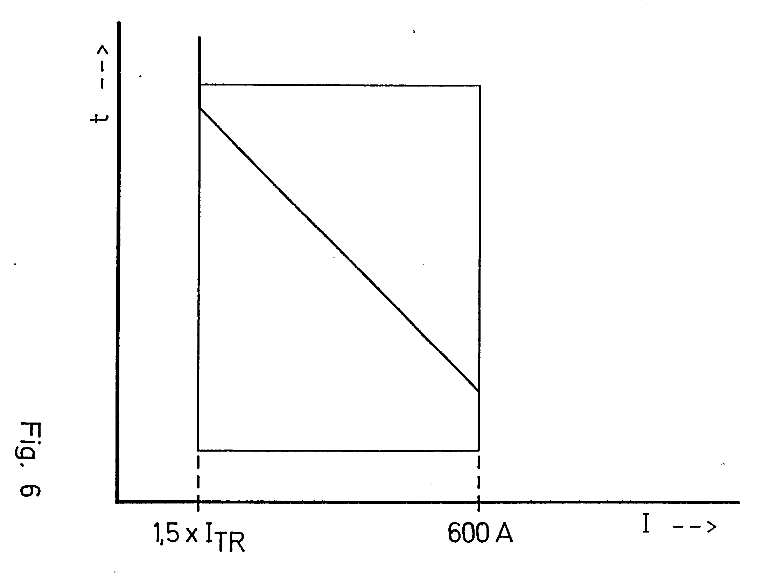

Das Funktionsprinzip wird anhand der Fig. 6 erläutert:
a) Nennbetrieb: Bis 1,5I_{N Trafo} keine Auslösung
b) Überstromgebiet: 1,5I_{N Trafo} bis 600A (maximal zulässiger Strom des Lasttrenners).
c) Kurzschlußgebiet: I_{Trafo} > 600A. Die obengenannten Merkmale führen zu einer Dreiteilung des Funktionsprinzips. Der Nennbetrieb mit der Anforderung "keine Auslösung unterhalb 1,5I_{N Trafo}" und das Überstromgebiet, der Bereich, in dem verschienene Kennlinien t=f (I/I_{N}) realisierbar sein müssen, deckt sich mit dem der zuvor beschriebenen Aufgabenstellung.
   Der Meßbereich von 1,5 I_{N Trafo} bis zu einem absoluten Strom von 600A erfordert jedoch besondere Anpassungsmaßnahmen, da bei 600A kein Bezug auf I_{N Trafo} bei einer einheitlichen Schnittstelle zwischen Wandler und Relais möglich ist. Die zuvor beschriebene Verschiebung der unteren Nenngrenze ist auch hier möglich. Das Kurzschlußgebiet ist für Ströme größer als 600A definiert. Ströme dieses Bereichs leiten eine Folgeschaltung ein. Zunächst wird der Ausgang A2 (Erdungsschalter) unverzögert angesprochen. Diese Schalthandlung führt zu einem sehr schnellen Anstieg des Stromes im Ringkabelfeld mit der Folge, daß der übergeordnete Lastschalter eine Kurzunterbrechung von etwa 300ms ausführt. Diese Kurzunterbrechung wird von den Eingängen E4 bis E9 sofort registriert. In diesem Zeitraum wird der Ausgang A1 (Lasttrenner) angesprochen. Der Lasttrenner öffnet dann stromfrei.

Auch hier bedeutet Auslösung die Ansteuerung einer oder zweier Stellglieder. Als Stellglieder kommen bei dieser Anwendung zwei Kleinschaltrelais zur Anwendung. Mit den Kleinschaltrelais werden die leistungsstarken Auslösemagnete des Lasttrenners (A1) und Erdungsschalters (A2) angesteuert.
Da auch hier das erfindungsgemäße Gerät als Selbstversorger arbeitet, tritt bei der geforderten Schaltreihenfolge im Zeitraum nach dem Schalten des Erdungsschalters die Situation auf, daß die Wandler im Trafoabzweig keine Versorgungsenergie mehr liefern. Die Versorgungseinheit überbrückt den Zeitraum vom Schalten des Erdungsschalters bis zur Betätigung des Lasttrenners (nach etwa 150ms). Die erste Phase von der Betätigung des Erdungsschalters bis zum Beginn der Kurzunterbrechung dauert ca. 1.65 s. Dazu kommt die Zeit bis zur Betätigung des Lasttrenners, die bis zu 0.3 s lang ist, aber möglichst schnell ausgeführt wird.

Die Eingänge haben die gleiche Konfiguration wie eingangs zu Fig. 2 und 4 beschrieben.

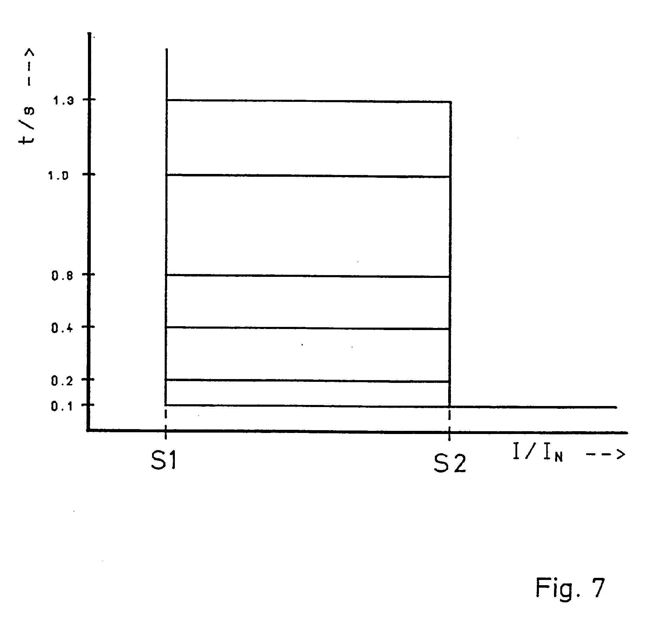

Das Funktionsprinzip wird anhand der Kennlinie in Fig. 7 beschrieben: Die Funktion wird bestimmt durch zwei Schaltschwellen, denen eine bestimmte Auslösezeit zugeordnet ist. Es ergibt sich somit eine Kennlinie mit drei charakteristischen Bereichen.

### a) Nennbetrieb

Ströme unterhalb der ersten Schaltschwelle bewirken keine Auslösung.

### b) Überstromgebiet

Wenn der Primärstrom zwischen den beiden Schaltschwellen liegt und für die gesamte Dauer der am Relais eingestellten Auslösezeit den ersten Schwellwert, wird der Auslösevorgang gestoppt und die Zeitstufe zurückgesetzt.

### c) Kurzschlußfall

Bei einem Primärstrom oberhalb der zweiten Schwelle erfolgt ebenfalls eine Auslösung (Auslösezeit t2).
Die Schaltschwellen sind im Meßbereich (1 bis 40I_{N}) veränderbar. Die Auslösezeit t1 ist über die Gehäuseklemmen im Bereich von 0,1 bis 2s stufig einstellbar.

Als Ausgang gibt es einen Leistungsimpulsausgang oder alternativ einen Relaisausgang wie zuvor beschrieben.

Grundlage für die Umsetzung des Primärstromes in die zugehörige Auslösezeit ist die Strom/Zeit-Kennlinie. Im Prinzip wird angenommen, daß der Strom von Null an auf einen bestimmten Wert springt und dieser dann bis zur Auslösung konstant bleibt. In diesem Fall wird bei Strombeginn aus der Kennlinie die Auslösezeit bestimmt und damit eine Zeitstufe gesetzt und gestartet. Eben dieser Stromsprung wird bei einer üblichen Kontrolle der Auslösezeit und bei der Typenprüfung verwendet.

In der Praxis sind die Verhältnisse komplizierter. Einerseits kann es bereits einen Dauerstrom gegeben haben, bevor der Überstrom eintstand und andererseits kann sich der Überstrom selbst stark ändern. Deshalb kann keine feste Auslösezeit ermittelt werden, statt dessen werden die Meßwerte der Stromstärke ständig gewichtet. Diese Gewichtung orientiert sich an der Kennlinie. Die Auslösung wird nicht über ein Zeitglied gesteuert, sondern z.B. wenn die Gesamtheit der Gewichtungszahlen einen bestimmten Wert erreicht hat, erfolgt die Auslösung sofort.

Der Strom kann so groß werden, daß für eine Auswertung der Meßergebnisse keine Zeit bleibt. In diesem Fall wird ein anderes Meßverfahren gewählt, nämlich die Momentanwertbetrachtung. Zur Sicherheit ist auch ein analoger Bypass vorteilhaft.

## Patentansprüche

1. Schutzeinheit, insbesondere zum Schutz von Verteiler-Transformatoren, die selbstversorgend ausgebildet ist, je Phase bestehend aus einem Stromwandler, einem elektronischen Relais sowie einem Stellglied, insbesondere einem Leistungsschalter zur Trennung von elektrischen Leitern, vorzugsweise mit einem Auslösemagneten, wobei das elektronische Relais eine Meßwert-Aufbereitungseinheit aufweist mit einem Analog-Digital-Wandler, zur digitalen Darstellung der vom Wandler erfaßten Meßgröße,
einen digitalen Speicher zum Ablegen einer digitalen Verkörperung mindestens einer Auslösekennlinie,
eine Recheneinheit, zum digitalen Vergleich der Meßgröße mit der Auslösekennlinie sowie einen Programmspeicher, zum Ablegen eines Vergleichs- und Auslösealgorithmus aufweist, **dadurch gekennzeichnet,** daß sie eine Steuereinheit zur Verteilung von Wandlerenergie aufweist, wobei die Steuereinheit einen Ableiter für überschüssige Energie aufweist.

2. Schutzeinheit nach Anspruch nach 1, **dadurch gekennzeichnet**, daß die Steuereinheit einen Energiespeicher für die Eigenversorgung aufweist.

3. Schutzeinheit nach Anspruch 1 oder 2, **dadurch gekennzeichnet,** daß die Steuereinheit einen Energiespeicher für den Leistungsschalter aufweist.

4. Schutzeinheit nach Anspruch 1, 2 oder 3, **dadurch gekennzeichnet,** daß das elektronische Relais in Baueinheit mit einem Wandler ausgebildet ist, vorzugsweise in einer Kapsel zur Vollisolierung.

5. Schutzeinheit nach Anspruch 1, 2, 3 oder 4, **dadurch gekennzeichnet,** daß das elektronische Relais potentialfreie Wechselkontakte aufweist.

6. Schutzeinheit nach Anspruch 1, 2, 3, 4 oder 5, **dadurch gekennzeichnet**, daß das elektronische Relais einen Zusatzeingang beispielsweise für ein Buchholzrelais oder für eine Austeuerung über eine Mitnehmerschaltung eines Niederspannungs-Leistungsschalters aufweist.

7. Schutzeinheit nach Anspruch 1, 2, 3, 4, 5 oder 6, **dadurch gekennzeichnet,** daß das elektronische Relais mindestens einen Stromwandler-Zusatzeingang zur Feststellung von Stromfluß in Ringkabelfeldern bei Verwendung eines Abschaltsystems aus Erdungs-Lasttrenn- und Leistungsschalter aufweist.

8. Schutzeinheit nach Anspruch 1, 2, 3, 4, 5, 6 oder 7, **dadurch gekennzeichnet,** daß das elektronische Relais selbstkalibrierend ausgebildet ist.

9. Schutzeinheit nach Anspruch 1, 2, 3, 4, 5, 6, 7 oder 8, **dadurch gekennzeichnet,** daß das elektronische Relais eine Watchdog-Schaltung aufweist.

10. Schutzeinheit nach einem oder mehreren der vorhergehenden Ansprüche, **dadurch gekennzeichnet,** daß das elektronische Relais eine Selbstdiagnoseschaltung aufweist und/oder, daß das elektronische Relais eine Wirkverbindung zu einem Display aufweist.

11. Schutzeinheit nach einem oder mehreren der vorhergehenden Ansprüche, **dadurch gekennzeichnet**, daß im elektronischen Relais eine Auslösewiederholung vorgesehen ist, vorzugsweise ohne Berücksichtigung der Kennlinie.

12. Schutzeinheit nach einem oder mehreren der vorhergehenden Ansprüche, **dadurch gekennzeichnet,** daß das elektronische Relais eine Eingabevorrichtung zur Eingabe eines simulierten Primärstromes aufweist.

## Claims

1. Protective unit, in particular for the protection of distributor transformers, which is of self-supplying design and comprises one current transformer for each phase, an electronic relay and an actuator, in particular a power circuit-breaker for isolation from electrical conductors, preferably having a tripping magnet, the electronic relay having a measured-value processing unit with an analog/digital converter for digitally displaying the measured variable determined by the transformer, a digital memory for storing a digital embodiment of at least one trip characteristic, a computer unit for digitally comparing the measured variable with the trip characteristic and a program memory for storing a comparison algorithm and a trip algorithm, characterized in that the protective unit has a control unit for distributing transformer power, the control unit having an excess power bleeder.

2. Protective unit according to Claim 1, characterized in that the control unit has a power store for the self-supply.

3. Protective unit according to Claim 1 or 2, characterized in that the control unit has a power store for the power circuit-breaker.

4. Protective unit according to Claim 1, 2 or 3, characterized in that the electronic relay is formed in a structural unit with a transformer, preferably in a total-insulation casing.

5. Protective unit according to Claim 1, 2, 3 or 4, characterized in that the electronic relay has potential-free changeover contacts.

6. Protective unit according to Claim 1, 2, 3, 4 or 5, characterized in that the electronic relay has an additional input, for example, for a Buchholz relay or for activation via a driver circuit of a low-voltage power circuit-breaker.

7. Protective unit according to Claim 1, 2, 3, 4, 5 or 6, characterized in that the electronic relay has at least one current-transformer additional input for determining current flow in ring-cable areas if a disconnection system comprising earth-fault load interrupter and power circuit-breaker is used.

8. Protective unit according to Claim 1, 2, 3, 4, 5, 6 or 7, characterized in that the electronic relay is of self-calibrating design.

9. Protective unit according to Claim 1, 2, 3, 4, 5, 6, 7 or 8, characterized in that the electronic relay has a watchdog circuit.

10. Protective unit according to one or more of the preceding claims, characterized in that the electronic relay has a self-diagnosis circuit and/or in that the electronic relay has an operational link to a display.

11. Protective unit according to one or more of the preceding claims, characterized in that a trip repeat is provided in the electronic relay, preferably without taking account of the characteristic.

12. Protective unit according to one or more of the preceding claims, characterized in that the electronic relay has an input device for inputting a simulated primary current.

## Revendications

1. Unité de protection notamment pour protéger des transformateurs de distribution qui sont auto-alimentés et se composent pour chaque phase d'un convertisseur de courant, d'un relais électronique ainsi que d'un organe d'actionnement notamment d'un disjoncteur de puissance pour la coupure des conducteurs électriques de préférence par un électro-aimant de déclenchement, le relais électronique ayant une unité de traitement de la valeur de mesure avec un convertisseur analogique/numérique pour donner une représentation numérique de la grandeur de mesure détectée par le convertisseur, une mémoire numérique pour inscrire une image numérique d'au moins une caractéristique de déclenchement, une unité de calcul pour la comparaison numérique des grandeurs de mesure à la caractéristique de déclenchement ainsi que d'une mémoire de programme pour enregistrer l'algorithme de comparaison et de déclenchement, caractérisée en ce qu'elle comprend une unité de commande pour distribuer l'énergie du convertisseur, cette unité de commande comportant un moyen d'évacuation de l'énergie en excédent.

2. Unité de protection selon la revendication 1, caractérisée en ce qu'elle comporte un accumulateur d'énergie pour assurer l'alimentation propre.

3. Unité de protection selon la revendication 1 ou 2, caractérisée en ce qu'elle comporte un accumulateur d'énergie pour le disjoncteur de puissance.

4. Unité de protection selon les revendications 1, 2 ou 3, caractérisée en ce que le relais électronique est réalisé sous la forme d'un ensemble avec un convertisseur, en étant de préférence encapsulé pour assurer une isolation totale.

5. Unité de protection selon la revendication 1, 2, 3 ou 4, caractérisée en ce que le relais électronique comporte des contacts de commutation hors tension.

6. Unité de protection selon la revendication 1, 2, 3, 4 ou 5, caractérisée en ce que le relais électronique comporte une entrée complémentaire par exemple pour un relais Buchholz, ou pour une commande par l'intermédiaire d'un circuit d'entraînement d'un disjoncteur de puissance basse tension.

7. Unité de protection selon la revendication 1, 2, 3, 4, 5 ou 6, caractérisée en ce que le relais électronique comporte au moins une entrée complémentaire de convertisseur de courant pour constater un passage de courant dans les champs du câble annulaire, en utilisant un système de coupure comprenant un disjoncteur de masse, de charge et de puissance.

8. Unité de protection selon la revendication 1, 2, 3, 4, 5, 6 ou 7, caractérisée en ce que le relais électronique est autocalibrant.

9. Unité de protection selon les revendications 1, 2, 3, 4, 5, 6, 7 ou 8, caractérisée en ce que le relais électronique comporte un circuit Watchdog.

10. Unité de protection selon l'une ou plusieurs des revendications précédentes, caractérisée en ce que le relais électronique comporte un circuit de diagnostic automatique et/ou le relais électronique présente une liaison active avec un affichage.

11. Unité de protection selon l'une ou plusieurs des revendications précédentes, caractérisée en ce que dans le relais électronique il y a un moyen de répétition du déclenchement, de préférence sans tenir compte de la caractéristique.

12. Unité de protection selon une ou plusieurs des revendications précédentes, caractérisée en ce que le relais électronique comporte un dispositif d'entrée pour introduire un courant primaire simulé.
